# EUROPEAN PATENT SPECIFICATION

(11) **EP 4 074 007 B1**
(45) Date of publication and mention of the grant of the patent: **24.05.2023**
(21) Application number: 19827839.2
(22) Date of filing: 13.12.2019
(51) Int. Cl.: H04L 67/52, H04W 4/021, H04W 4/12, H04L 67/53, H04L 67/55, H04W 4/08

(54) **EVENT NOTIFICATIONS TARGETING ANY USER IN A SPECIFIED TARGET AREA**
EREIGNIS BENACHRICHTIGUNG DIE AUF IRGENDEINEN BENUTZER IN EINEM ZIELRAUM GERICHTET IST
NOTIFICATION D'EVENEMENT CIBLE A UN UTILISATEUR QUELCONQUE DANS UN ENDROIT SPECIFIQUE

(43) Date of publication of application: 19.10.2022
(73) Proprietor: Telefonaktiebolaget LM ERICSSON (PUBL), 16483 Stockholm (SE)
(72) Inventor: DAUNERIA, Ankur, New Delhi 110014 (IN); FOTI, George, Quebec H9G2Z8 (CA)
(74) Representative: Ericsson
(86) International application number: PCT/IB2019/060739
(87) International publication number: WO 2021/116739

(56) References cited:
- WO-A1-2019/104357
- WO-A1-2019/197426
- US-A1- 2018 270 778

## Description

### TECHNICAL FIELD

The present disclosure relates generally to network exposure in a wireless communication network and, more particularly, to event notifications for events targeting any user in a specified target area.

### BACKGROUND

The Fifth Generation (5G) core network (5GC) implements a service-based architecture (SBA) that enables network functions (NFs) in the control plane to expose service-based interfaces (SBIs) and act as service consumers or producers. The NFs register the services and capabilities offered by the NF with a Network Repository Function (NRF) so that the services and capabilities of the NF can then be discovered by other NFs. An NF offering services to other NFs is referred to a service producer. An NF can discover and subscribe to services offered by another NF. An NF that subscribes to a service offered by another NF is referred to as a service consumer. An NF can function as both a service provider and a service consumer.

The Third Generation Partnership Project (3GPP) is now working on extending the SBA to industry verticals. The extension of the SBA to industry verticals creates numerous opportunities that provide new sources of revenues for operators. One exemplary use case created by the SBA is network-initiated streaming. Network-initiated streaming is a procedure that enables third parties to stream content to users within the wireless communication network. An exemplary use case for network-initiated streaming is on-sport advertising directed to users in the vicinity of local businesses to increase foot traffic at local businesses.

The current subscription-based procedures for network-initiated streaming services are not flexible enough to handle many use cases that are contemplated and do not easily scale to large numbers of users.

WO 2019/197426 A1 discloses a method performed by a Session Management Function (SMF). The method comprises: receiving a request from an Application Function (AF) for handling a Protocol Data Unit (PDU) session associated with a User Equipment (UE); and sending, to an intermediate SMF (I-SMF), information for use in handling the PDU session in a service area associated with the I-SMF.

WO 2019/104357 A1 discloses subscription-based, UE event notification techniques for use in a mobile network. In one illustrative example, an event subscription request from an application server may be received at a network exposure function (NEF) entity of a 5G mobile network. The event subscription request may include a list of one or more subscribed events for a UE, which may include a UE attach event and/or a UE detach event. A context which indicates the one or more subscribed events may be created for the UE. Sometime during network operation, an indication of an occurrence of an event associated with the UE is received. The indication is received from a policy and charging function entity when the UE is configured for IP data delivery, or from an access and mobility management function (AMF) entity when the UE is configured for non-IP data delivery (NIDD).

US 2017/0270778 A1 discloses a method for PDU session management. The method includes initiating a PDU session for an AF within an application server (AS) that is not part of a cellular network and sending configuration information to a NEF to communicate directly with an NF of the cellular network to provide services for the PDU session.

### SUMMARY

The present disclosure provides a mechanism supporting event notifications for dynamic group events targeting any user (e.g. all users) in a specified target area. The target area for the dynamic group event is user-defined (i.e., defined by the advertiser) and can be based on a *priori* information. For example, the target area for a dynamic group event can be a traffic signal location, an area within a shopping mall, a historic site, a venue for a sporting event or trade fair, other locations where dynamically created groups are likely to occur. In some embodiments, the dynamic group event includes an option to receive updates when a user within a target area establishes a Packet Data Unit (PDU) session after entering the target area but before leaving. Also, the dynamic group event includes alternating periods for reporting and non-reporting, which is useful, for example, in the traffic signal scenario to synchronize the network-initiated streaming with the traffic signal pattern.

The aspects of the invention are disclosed in the appended claims.

### BRIEF DESCRIPTION OF THE DRAWINGS

Figure 1 illustrates an exemplary communication network enabling event notifications as herein described.
Figure 2 illustrates on-spot advertisements targeting users in vehicles at an intersection of two roads.
Figure 3 illustrates an example of alternating time intervals for reporting and no reporting dynamic group event.
Figures 4A and 4B illustrate one example of event notification in the case where a UE enters a target area and establishes a PDU session.
Figures 5A and 5B illustrate another example of event notification in the case where a UE enters a target area but does not immediately establish a PDU session.
Figure 6 illustrates an exemplary method implemented by a network node in the wireless communication network providing event notification related to a dynamic group event to an application server.
Figure 7 illustrates an exemplary method implemented by a producer network node in the wireless communication network providing event notifications related to a dynamic group event to a consumer network node.
Figure 8 illustrates an exemplary method implemented by an application server external to the wireless communication network for receiving event notifications related to a dynamic group event.
Figure 9 illustrates an exemplary network node in the wireless communication network providing event notifications related to a dynamic group event to an application server.
Figure 10 illustrates an exemplary producer network node in the wireless communication network providing event notification related to a dynamic group event to a consumer network node.
Figure 11 illustrates an application server external to the wireless communication network receiving event notifications related to a dynamic group event.
Figure 12 illustrates a network node or application server according to an embodiment.

### DETAILED DESCRIPTION

Referring now to the drawings, an exemplary embodiment of the disclosure will be described in the context of a 5G wireless communication network. Those skilled in the art will appreciate that the methods and apparatus herein described are not limited to use in 5G networks but may also be used in wireless communication networks operating according to other standards.

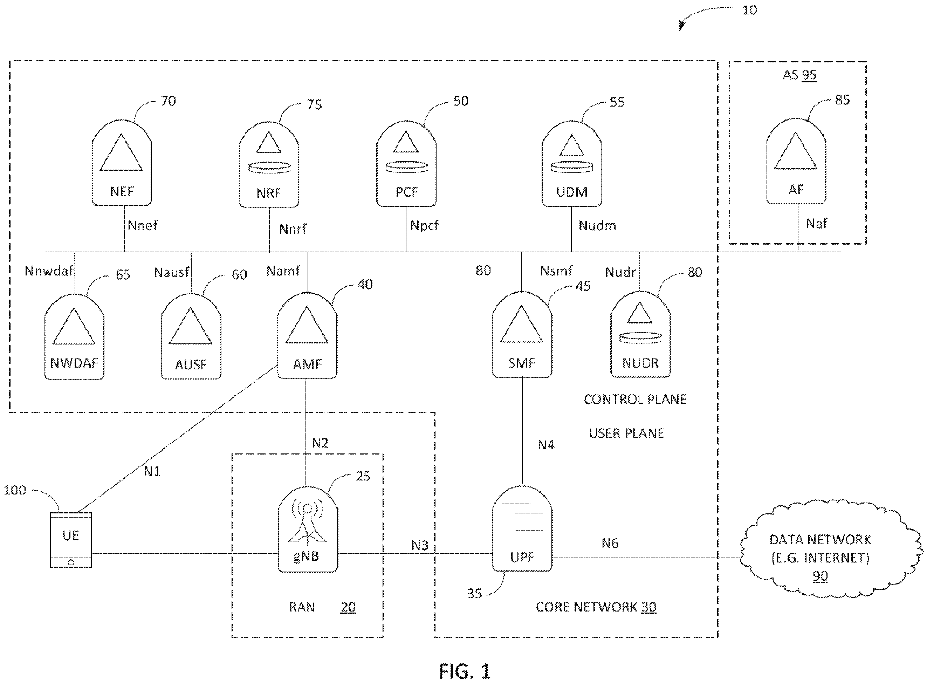

Figure 1 illustrates a wireless communication network 10 according to one exemplary embodiment. The wireless communication network 10 comprises a radio access network (RAN) 20 and a 5GC 30 employing a service-based architecture. The RAN 20 comprises one or more base stations 25 providing radio access to user equipment (UEs) 100 operating within the wireless communication network 10. The base stations 25 are also referred to as Evolved NodeBs (eNBs), gNodeBs (gNBs) or Next Generation eNBs (ng-eNBs). The 5GC 30 provides a connection between the RAN 20 and other packet data networks 90, such as the Internet Protocol (IP) Multimedia System (IMS) or the Internet.

In one exemplary embodiment, the 5GC 30 comprises a User Plane Function (UPF) 35, an Access And Mobility Management Function (AMF) 40, a Session Management Function (SMF) 45, a Policy Control Function (PCF) 50, a Unified Data Management (UDM) function 55, a Authentication Server Function (AUSF) 60, a Network Exposure Function (NEF) 70, a Network Repository Function (NRF) 75 and a Uniform Data Repository (UDR) 80. The core network 30 may additionally include a NWDAF (65) for generating and distributing analytics reports. These NFs comprise logical entities that reside in one or more core network nodes, which may be implemented by one or more processors, hardware, firmware, or a combination thereof. The functions may reside in a single core network node or may be distributed among two or more core network nodes.

The 5GC 30 implements a service-based architecture (SBA) that enables network functions (NFs) in the control plane to expose service-based interfaces (SBIs) and act as service consumers or producers. The NFs register the services and capabilities offered by the NF with the NRF 75 so that the services and capabilities of the NF can then be discovered by other NFs. An NF offering services to other NFs is referred to a service producer. An NF can discover and subscribe to services offered by another NF. An NF that subscribes to a service offered by another NF is referred to as a service consumer. An NF can function as both a service provider and a service consumer.

Recently, the SBA has been extended to industry verticals so the services and capabilities of the NFs in the 5GC 30 can be exposed to an AF 85 external to the wireless communication network 10 as shown in Figure 1. The extension of the SBA to industry verticals creates numerous opportunities that provide new sources of revenues for operators. One exemplary use case created by the SBA is network-initiated streaming. Network-initiated streaming is a procedure that enables third parties to stream content to users within the wireless communication network 10. The exposure of network capabilities enables an application server AS (95) external to the wireless communication network 10 to discover and stream content to users within the wireless communication network 10.

Many businesses rely on on-spot promotions to increase customer traffic. Such promotions target users in an area around the location of the business and help steer traffic to local businesses. There are many scenarios where on-sport advertising can be useful in increasing customer traffic. Some exemplary use cases for on-spot advertisements are described below.

### Use Case 1: Traffic Signal

Traffic signals along roadways present a unique opportunity for on-sport promotions to steer customer traffic to nearby businesses. Millions of people commute daily to work, school, and other places. The pervasiveness of connected vehicles and smartphones. combined with the large number of daily commuters, creates an opportunity for businesses to attract customers traveling along the roadway. When a vehicle is stopped at an intersection, on-spot advertisements may attract the occupants of the vehicle to a local business. Thus, a traffic signal is a potential decision making point that provides an opportunity to increase traffic to a local business.

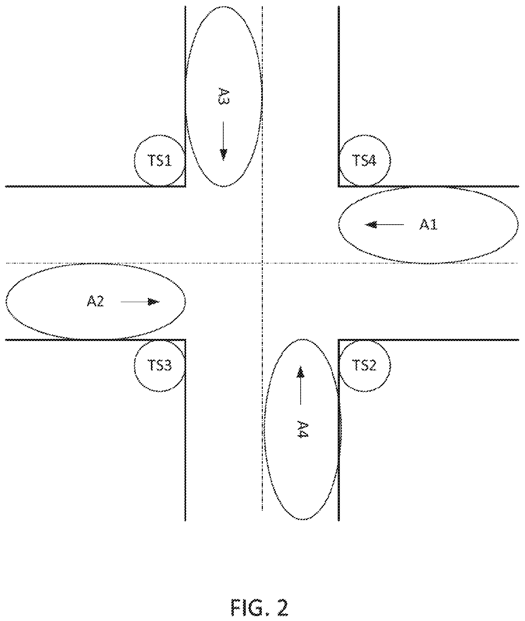

Figure 2 illustrates how on-spot advertisements can be used to target users in vehicles at an intersection of two roads. Traffic moving through the intersection will be stopped or moving depending on the traffic signal pattern at the intersection. In this example, four traffic signals denoted as TS1-TS4 are shown controlling traffic moving in different directions. There are four corresponding areas A1-A4 where traffic will accumulate depending on the traffic signal pattern. Each target area A1-A4 is associated with a respective one of the traffic signals TS1 - TS4. In this case, the techniques herein described enable advertisements to be streamed to traffic stopped in any one of the four areas A1-A4 depending on the timing pattern of the traffic signals TS1-TS4. The streaming of advertisements is synchronized with the timing pattern of the traffic signals so that the advertisements target the vehicles that are stopped at any given point in time.

### Use Case 2: Shopping Mall

As the number of users at shopping malls accumulates, there are multiple occasions when businesses inside the mall may like to promote on-spot offers and discounts to potential customers inside the mall to increase sales of select products. In such situations, local businesses need a mechanism to advertise their products/offers when the number of peoples inside the mall reaches a sizeable number. The number of shoppers in the mall is subject to wide variability depending on time. The larger the crowd inside the mall, the more chances there will be to attract customers with on-spot advertising. Therefore, it is desirable to send on-spot advertisements when the crowd size is sufficiently large.

### Use Case 3: Unexpected Incidents (e.g., traffic jam)

Traffic jams can happen due to both planned and unplanned events, such as accidents, vehicle breakdown, road construction, peak hour traffic, etc., leading to accumulation of UEs at a particular location in a short span of time. Businesses seeking to advertise their products and services as excellent opportunities for targeted advertisements.

### Use Case 4: Sporting Events

Sporting events bring a lot of users to a stadium to enjoy the event at a particular time and location. Further, roads leading up to the stadium are likely to have more traffic than usual at the start and end of the event as people travel to and from the event. Sporting events thus provide an excellent opportunity for on-spot advertising for businesses looking to advertise their products and services to sports fans at the event.

Similarly, private events organized by individuals, such as weddings, birthday parties, etc., can bring large numbers of people to a home or other venue for a short period of time. time.

### Use Case 5: Trade Fairs

Trade fairs are organized events that occur at a particular location for few days in different cities in order to promote different products from different parts of the world. Trade fairs typically attract a diverse crowd of people for few days and people attending such trade fairs are more likely to purchase products at the trade fair than on many other occasions. Businesses at or near the fair may desire to advertise their products and services to the people attending the fair.

### Use Case 6: Museums and Historic Sites

Museums and historical sites are a frequent destination for field trips organized by school and colleges as part of school activities. Field trips can bring a large number of people to historic sites for short time periods as students from many different schools visit these sites. Businesses at or near the historic site may desire to advertise their products and services to visitors at the historic site.

The use cases described above provide a few examples where large groups of people may be dynamically created at a particular place and time. These occasions provide an excellent opportunity for targeted advertisements by local businesses.

One aspect of the present disclosure comprises techniques to enable network-initiated streaming to users within a dynamically created group. A new event, referred to herein as a dynamic group event, is introduced to enable advertisers to target potential customers in dynamically created groups within a defined target area using network capability exposure procedures defined in 3GPP TS 23.502 v. 16.2.0 (Sep 2019). The target area for the dynamic group event is user-defined (i.e., defined by the advertiser) and can be based on a *priori* information. For example, the target area for a dynamic group event can be a traffic signal location, an area within a shopping mall, a historic site, a venue for a sporting event or trade fair, other locations where dynamically created groups are likely to occur. In some embodiments, the dynamic group event includes an option to receive updates when a user within a target area establishes a Packet Data Unit (PDU) session after entering the target area but before leaving. Also, the dynamic group event can include alternating periods for reporting and non-reporting, which is useful, for example, in the traffic signal scenario to synchronize the network-initiated streaming with the traffic signal pattern.

To receive event notifications for dynamically created groups, an application server (AS) 95 operated by the advertiser identifies a target area of interest and sends a subscription request to the NEF 70 in the 5GC 30. The subscription request includes a vertical industry identifier that identifies the AS 95 and event filter information that targets any user (i.e., all users) in a target area specified by the event filter information. The event filter information includes an event identifier (event ID) and target area information. The target area can be defined using existing procedures specified in 3GPP TS 23.502 v. 16.2.0 (Sep 2019) and 3GPP TS 23.501 v. 16.2.0 (Sep 2019). The NEF 70 identifies the AMFs 40 serving the target area for the dynamic group event and subscribes to receive event notifications from the AMFs 40 according to the event filter information. The NEF 70 can be configured by the operator to send a subscription to some or all of the AMFs 40 for the target area.

The event filter information provides event parameter types and event parameter value(s) to be matched against, in order to meet the condition for notifying the subscribed Event ID. For example, the event parameter type could be "Area of interest" and event parameter value list could be list of target areas of interest. The target area of interest can be specified using digital cellular telecommunications system (Phase 2+); Universal Geographical Area Description (GAD) (3GPP TS 03.32 version 7.2.0 Release 1998). The Event Filter information depends on the Event ID. The event filter information is provided for each Event ID. Within a subscription, different Event IDs may be associated with different event filter information.

In one exemplary embodiment, the event filter information for a dynamic group event comprises the following event parameter types:
Event ID - uniquely identifies the event;
Target Area of Interest - a list of target areas for the subscription
Update Parameter -Boolean value to turn updated event notifications on or off
UE Selection Criteria - identifies UEs for which event notifications are desired. A value of "all" targets all UEs in the target area;
Start time of Notification (this will be set by the AS depending on when the subscription is sent,
T1: Reporting Interval for reporting events relative start time and repeated every (T 1 +T2);
T2: Interval of not reporting relevant to the reporting time and repeated every (T 1 +T2).

The event parameters Start Time, T1 and T2 comprise timing information for alternating reporting and non-reporting intervals as hereinafter described.

When a UE 100 registers with or is handed over to AMF 40, the AMF 40 verifies is the conditions of the dynamic group event are satisfied. If so, the AMF 40 sends an event notification to the NEF 70, which forwards the event notification to the AS 95. Before sending the event notification, the AMF 40 may wait for a predetermined amount of time to allow the UE 100 to establish a PDU session. If the UE 100 establishes a PDU session within the predetermined amount of time, the AMF 40 includes the IP address of the UE 100 in the event notification. The AMF 40 may optionally include the Generic Public Subscription Identifier (GPSI) of the UE 100 in the event notification. If the UE 100 does not establish a PDU session, the AMF 40 sends the event notification without an IP address, but includes the GPSI of the UE 100 or other UE identifier in the event notification.

The event filter information for the dynamic group event may include an optional update parameter for cases where an IP address is not provided in the first event notification. The update parameter enables the AS 95 to receive an updated event notification when a UE 100 in the target area establishes a PDU session after the first event notification is sent but before it leaves the target area. When the UE 100 establishes a PDU session while still in the target area, the AMF 40 will send an updated event notification to the NEF 70, which will forward the updated event notification to the AS 95.

When the AS 95 receives an event notification or updated event notification including the IP address of the UE 100, it can use existing procedures specified in 3GPP TS 23.502, Section 4.13.2 to download or stream the content to the UE 100 directly and a UE application can play the content for the user. In this case, the streaming of the content is transparent to the network and the network operator charges only for the event notifications.

When the AS 95 receives an event notification without the IP address of the UE 100, its next action depends on its business agreement with the network operator. Some network operators may allow the AS 95 to trigger a PDU session establishment procedure to establish a PDU session between the UE 10 and the network. In this case, the AS 95 can use existing procedures to request a PDU session establishment. Once an IP address is provided to the AS 95 through an updated event notification from the AMF 40, the AS 95 downloads or streams the content to the UE 100 directly and a UE application plays the content for the user. In this case, the network operator can charge an advertiser for the updated event notification and PDU establishment in addition to the charge for the first event notification.

In cases where the network operator does not allow application triggered session establishment and the event notification does not include an IP address for the UE 100, the AS 95 must wait for an updated event notification. If an updated event notification is received while the UE 100 is still in the target area, the AS 95 can download or stream the content to the UE 100 directly and a UE application can play the content for the user.

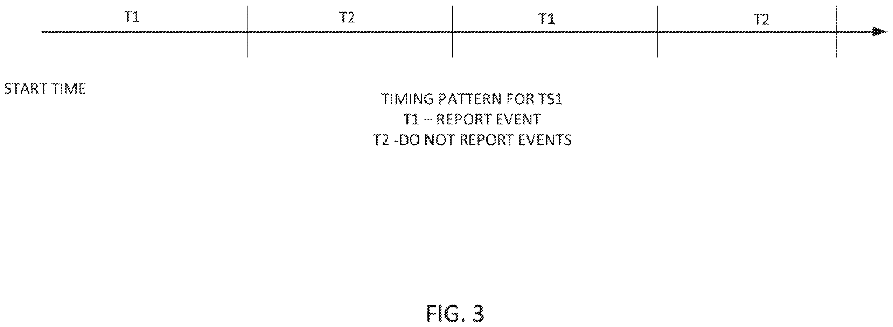

According to another aspect of the disclosure, the dynamic group event can include timing information for alternating reporting and non-reporting time intervals. The timing information can be included in the event filter information identified by the subscription request from the AS 95, or can be retrieved from a data repository based on the event ID included in the event filter information. The timing information defines alternating time intervals during which the AMF 40 reports or does not report events as shown in Figure 3. This option is useful, for example, the traffic signal scenario. The timing information may include, for example, a start time, a first duration for the first time interval and a second duration for the second time interval.

Figure 3 shows alternating time periods denoted as T1 and T2 associated with traffic signal TS1 in Figure 2. Time T1 may, for example, correspond to a time interval when the traffic signal is red and traffic is stopped in the target area. Time interval T2 may correspond to a time interval when the traffic signal is green or yellow and traffic is moving. During the time interval T1, the AMF 40 will report events according to the event filter information. During the time interval T2, the AMF 40 refrains from reporting events. The time intervals T1 and T2 can be defined defined relative to a start time.

The timing information enables advertisers to target users in traffic moving along the roadways and stream of advertisements at times when the traffic is stopped and users are more likely to be influenced by the advertisements. Thus, the streaming of advertisements can be synchronized with the timing pattern of the traffic signal.

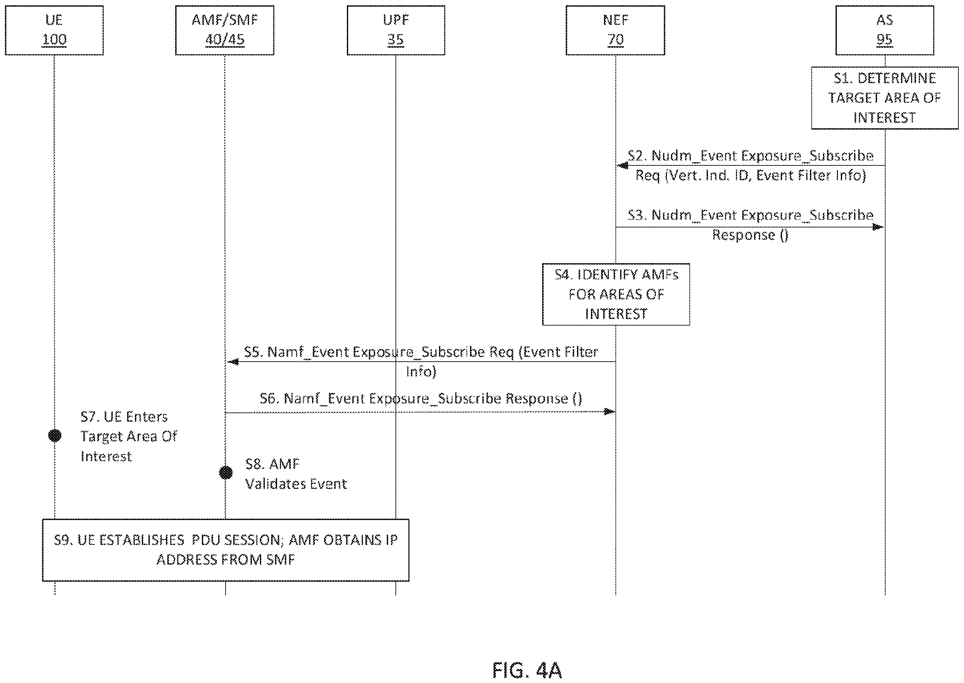

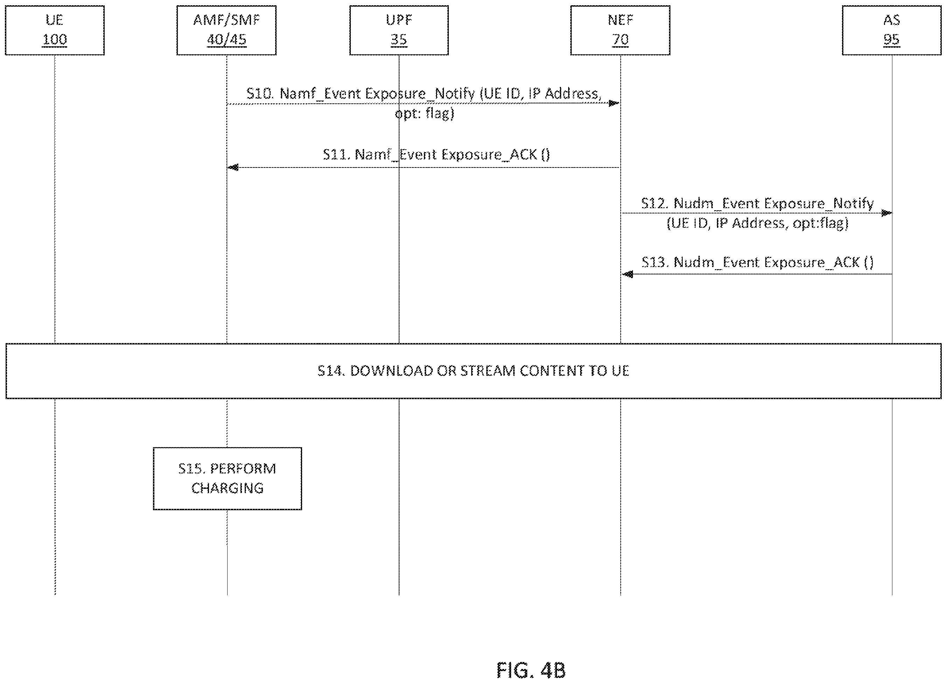

Figures 4A and 4B illustrate one example of event notification in the case where a UE 100 enters a target area and establishes a PDU session. The AS 95 initially determines a target area of interest (S1) and sends a first subscription request (e.g., Nudm_Event Exposure_Subscribe Request) to the NEF 70 (S2). The first Subscription request includes a vertical industry ID that identifies the requesting AS 95 and filter information for a dynamic group event. The filter information may include, for example, an Event ID, an application-specific Target Area of Interest (TAOI) and an optional update parameter as previously described. In some cases, the filter information may further include timing information defining alternating reporting and non-reporting time intervals. A separate subscription is made for each target area of interest. In some embodiments, the event filter information can be stored in a data repository and the subscription request may include a pointer or address for the event filter information stored ii the data repository. For example, the subscription request may include an Event ID that can be used to retrieve the remaining event filer information from the data repository.

The AS 95 may, for example, use the Digital Cellular Telecommunications System (Phase 2+); Universal Geographical Area Description (GAD) (3GPP TS 03.32 version 7.2.0 Release 1998) or other known standard to define the target area of interest. The Universal GAD enables the AS 95 to custom define an application-specific target area without being constrained to areas previously defined by the network (e.g. cells, tracking areas, etc.).

Responsive to the receipt of the subscription request, the NEF 70 sends a subscription response (e.g., Nudm_Event Exposure_Subscribe Response) to acknowledge the subscription request (S3). The NEF 70 identifies the AMFs 40 covering the target area of interest (S4) and sends a second subscription request (e.g., Namf_Event Exposure_Subscribe Request) to the relevant AMFs 40 (S5). The second subscription request includes the event filter information from the first subscription request. Responsive to the receipt of the subscription request, the AMF 40 sends a subscription response (e.g., Namf_Event Exposure_Subscribe Response) to acknowledge the subscription request (S6) and stores the event filter information.

After the subscription for the dynamic group event is created, a UE 100 enters the target area of interest (S7) and the AMF 40 verifies that the event (UE 100 entering target area of interest) meets the filter criterion for the dynamic group event (S8). Validation of the event is based in the event filter information contained in the second subscription request. To understand and verify the event, the AMF 40 may need to be modified to implement Universal GAD, or other standard for describing a geographic area.

In this example, the UE 100 establishes a PDU session with the UPF 35 within a predetermined time period and the AMF 40 obtains the IP address of the UE 100 from the SMF 45 during or following the sessions establishment procedure (S9). As one example, the AMF 40 sends a subscription request to the SMF 45 with an immediate reply to receive the IP Address allocated to the UE 100. After the IP address is obtained, the AMF 40 sends an event notification (e.g., Namf_Event Exposure_Notify) to the NEF 70 (S10). The event notification includes the UE ID and IP address allocated to the UE 100 for the PDU session. The event notification can also optionally include a flag or other indicator indicating that the UE is engaged in a PDU session. Upon receipt of the event notification from the AMF 40, the NEF 70 acknowledges the event notification (e.g., Namf_Event Exposure_Ack) (S11) and forwards the event notification to the AS 95 (e.g., Nudm_Event Exposure_Notify) (S12). Upon receipt of the event notification from the NEF 70, the AS 95 acknowledges the event notification (e.g., Nudm_Event Exposure_Ack) (S13.)

When the AS 95 obtains the IP address of the UE 100, the AS 95 can download or stream content (e.g., advertisements) directly to the UE 100, which can be played by an application running on the UE 100 (S14). Also, the AMF 40 can perform charging for the event notification (S15). Charging can be performed by the AMF 40 any time after sending the event notification and is not dependent on whether the AS 95 downloads any content.

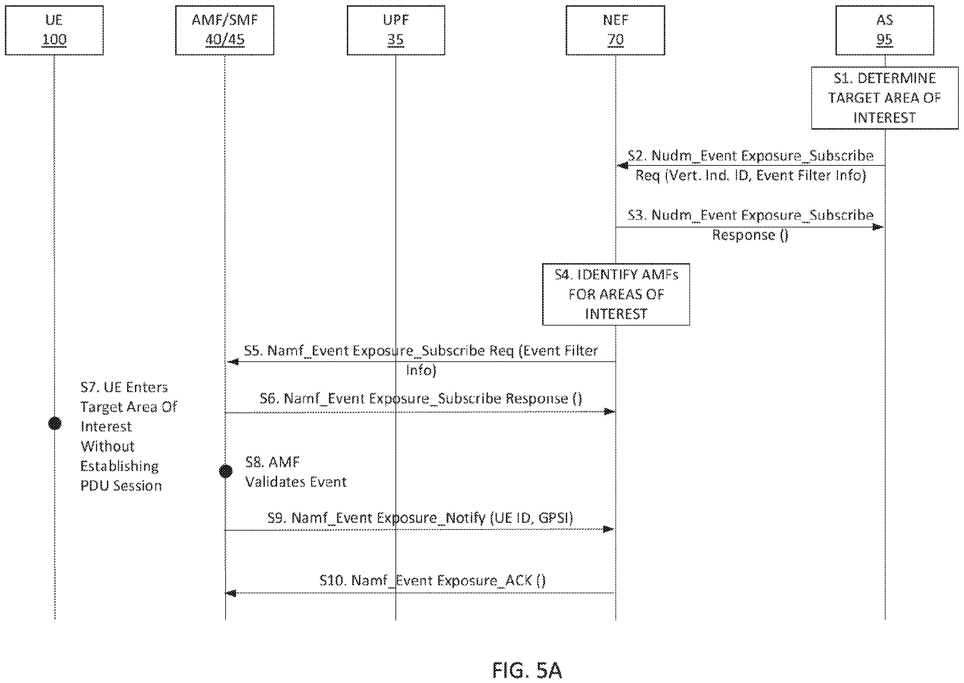

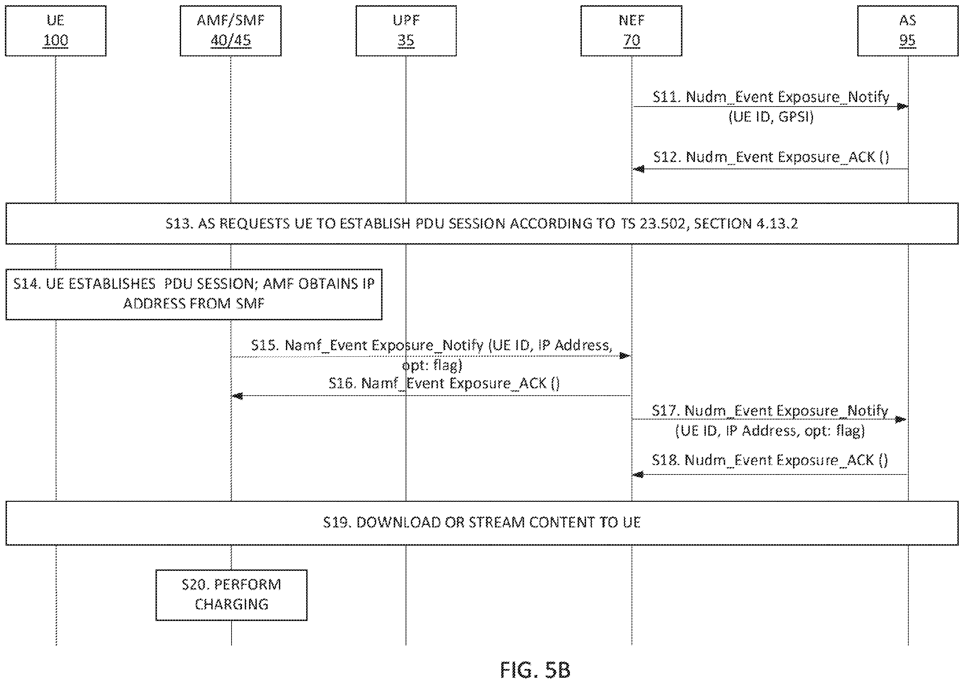

Figures 5A and 5B illustrate another example of event notification in the case where a UE 100 enters a target area but does not immediately establish a PDU session. The AS 95 initially determines a target area of interest (S1) and sends a first subscription request (e.g., Nudm_Event Exposure_Subscribe Request) to the NEF 70 (S2). The first Subscription request includes a vertical industry ID that identifies the requesting AS 95 and filter information for a dynamic group event. The filter information may include, for example, an Event ID, Target Area of Interest (TAOI) and an optional update parameter as previously described. In some cases, the filter information may further include timing information defining alternating reporting and non-reporting time intervals. A separate subscription is made for each target area of interest. In some embodiments, the event filter information can be stored in a data repository and the subscription request may include a pointer or address for the event filter information stored ii the data repository. For example, the subscription request may include an Event ID that can be used to retrieve the remaining event filer information from the data repository.

Responsive to the receipt of the subscription request, the NEF 70 sends a subscription response (e.g., Nudm_Event Exposure_Subscribe Response) to acknowledge the subscription request (S3). The NEF 70 identifies the AMFs 40 covering the target area of interest (S4) and sends a second subscription request (e.g., Namf_Event Exposure_Subscribe Request) to the relevant AMFs 40 (S5). The second subscription request includes the event filter information from the first subscription request. Responsive to the receipt of the subscription request, the AMF 40 sends a subscription response (e.g., Namf_Event Exposure_Subscribe Response) to acknowledge the subscription request (S6) and stores the event filter information.

After the subscription for the dynamic group event is created, a UE 100 enters the target area of interest (S7) and the AMF 40 verifies that the event (UE 100 entering target area of interest) meets the filter criterion for the dynamic group event (S8). Validation of the event is based in the event filter information contained in the second subscription request.

In this example, the UE 100 does not immediately establish a PDU session with the UPF 35 within a predetermined time period. After expiration of the predetermined time period, the AMF 40 sends an event notification (e.g., Namf_Event Exposure_Notify) to the NEF 70 (S9). The event notification includes the UE ID and GPSI of the UE 100. Upon receipt of the event notification from the AMF 40, the NEF 70 acknowledges the event notification (e.g., Namf_Event Exposure_Ack) (S10) and forwards the event notification to the AS 95 (e.g., Nudm_Event Exposure_Notify) (S11). Upon receipt of the event notification from the NEF 70, the AS 95 acknowledges the event notification (e.g., Namf_Event Exposure_Ack) (S12.)

If the network operator allows application triggered PDU session establishment, the AS 95 can request the UE 100 to establish a PDU session as described in TS 23.502, Section 4.13.2 (S13). Otherwise, the AS 95 must wait for the UE 100 to establish the PDU session on its own initiative. In either case, the UE 100 performs a PDU session establishment procedure (responsive to the request from the AS 95 or on its own initiative) and the AMF 40 obtains the IP address of the UE 100 from the SMF 45 during or following the sessions establishment procedure (S14). As one example, the AMF 40 sends a subscription request to the SMF 45 with an immediate reply to receive the IP Address allocated to the UE 100. After the IP address is obtained, the AMF 40 sends a second event notification (e.g., Namf_Event Exposure_Notify) to the NEF 70 (S15). The event notification includes the UE ID and IP address allocated to the UE 100 for the PDU session. The event notification can also optionally include a flag or other indicator indicating that the UE is engaged in a PDU session. Upon receipt of the event notification from the AMF 40, the NEF 70 acknowledges the event notification (e.g., Namf_Event Exposure_Ack) (S16) and forwards the event notification to the AS 95 (e.g., Nudm_Event Exposure_Notify) (S17). Upon receipt of the event notification from the NEF 70, the AS 95 acknowledges the event notification (e.g., Nudm_Event Exposure_Ack) (S18.)

When the AS 95 obtains the IP address of the UE 100, the AS 95 can download or stream content (e.g., advertisements) directly to the UE 100, which can be played by an application running on the UE 100 (S19). Also, the AMF 40 can perform charging for the event notification (S20). Charging can be performed by the AMF 40 any time after sending the event notification and is not dependent on whether the AS 95 downloads any content.

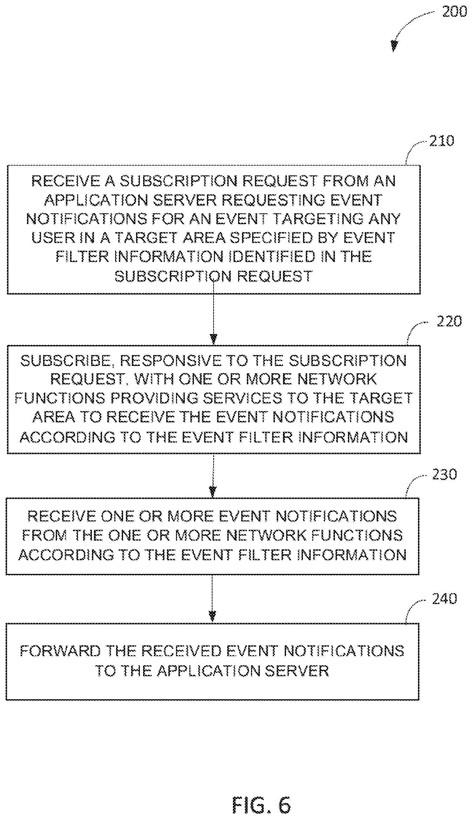

Figure 6 illustrates an exemplary method 200 implemented by a network node (e.g., NEF 70) in the wireless communication network. The NEF 70 receives a subscription request from an AS 95 requesting event notifications for an event targeting any user in a target area specified by event filter information identified by the subscription request (block 210). Responsive to the subscription request from the AS 95, the NEF 70 subscribes with one or more producer network nodes (e.g., AMFs 40 and/or SMFs 45) providing services to the target area to receive event notifications according to the event filter information identified in the subscription request (block 220). The NEF 70 subsequently receives a one or more event notification from one of the producer network nodes according to the event filter information (block 230). Responsive to receipt of the event notifications from the producer network node, the NEF 70 forwards the received event notifications to the AS 95 (block 240).

In some embodiments of the method 200, one or more of the event notifications forwarded to the AS 95 includes an IP address of a targeted user when the targeted user has an established PDU session.

In some embodiments of the method 200, one or more of the event notifications forwarded to the AS 95 includes a user identity of a targeted user when the targeted user does not have an established PDU session.

In some embodiments of the method 200, the subscription request includes a request to receive a supplemental notification when a targeted user in the target area establishes a PDU session after entering the target area.

In some embodiments of the method 200, the event filter information includes time information for alternating reporting and non-reporting intervals wherein the NEF 70 receives the event notifications for events occurring in the reporting interval only.

Some embodiments of the method 200 further comprise suspending the event notifications while maintaining the subscription to the event notifications, and resuming the event notifications.

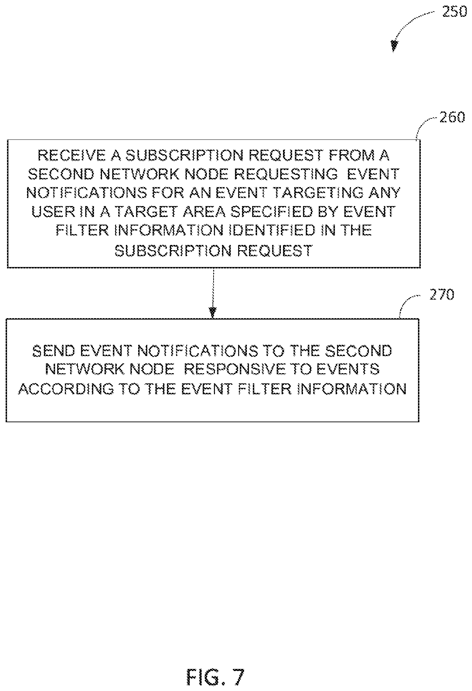

Figure 7 illustrates an exemplary method 250 implemented by a network node (e.g. AMF 40 or SMF 45) of providing event notifications for dynamic group events. The AMF 40 receives a subscription request from a NEF 70 requesting event notifications for an event targeting any user in a target area specified by event filter information identified by the subscription request (block 260). Responsive to the subscription request, the AMF 40 sends event notifications to the NEF 70 responsive to event triggers defined by event filter information contained the subscription request.

In some embodiments of the method 250, one or more of the event notifications includes an IP address of a targeted user when the targeted user has an established PDU session.

Some embodiments of the method 250 further comprise requesting from a SMF 45, the IP address of the targeted user, and receiving, responsive to the request, the IP address of the targeted user from the SMF 45.

In some embodiments of the method 250, one or more of the event notifications includes a user identity of a targeted user when the targeted user does not have an established PDU session.

In some embodiments of the method 250, the subscription request includes a request to receive a supplemental notification when a targeted user in the target area establishes a PDU session after entering the target area.

In some embodiments of the method 250, the event filter information includes time information for alternating reporting and non-reporting intervals wherein the network exposure function receives the event notifications for events occurring in the reporting interval only.

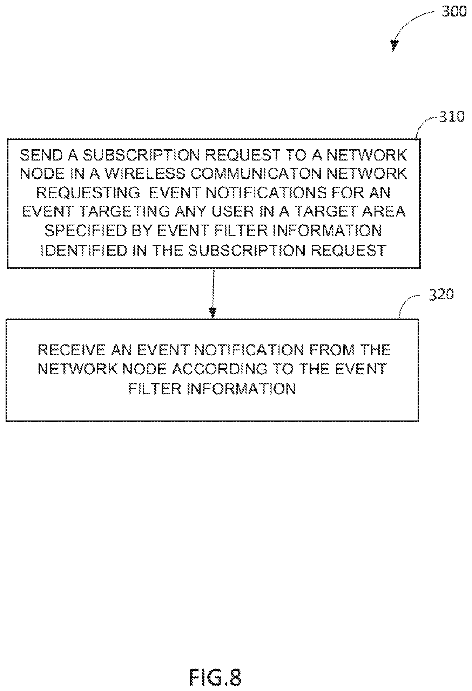

Figure 8 illustrates an exemplary method 300 implemented by an AS 95 external to a wireless communication network 10 (e.g., AS 95) of receiving event notifications from another network node (e.g. NEF 70) in the wireless communication network 10 responsive tor dynamic group events. The AS 95 sends a subscription request to a NEF 70 requesting event notifications for an event targeting any user in a target area specified by event filter information identified by the subscription request (block 310). The AS 95 further receives one or more event notifications from the NEF 70 responsive to events according to the event filter information.

In some embodiments of the method 300, one or more of the event notifications includes an IP address of a targeted user when the targeted user has an established PDU session.

In some embodiments of the method 300, one or more of the event notifications includes a user identity of a targeted user when the targeted user does not have an established PDU session.

In some embodiments of the method 300, the subscription request includes a request to receive a supplemental notification when a targeted user in the target area establishes a PDU session after entering the target area.

In some embodiments of the method 300, the event filter information includes time information for alternating reporting and non-reporting intervals wherein the application server (95) receives the event notifications for events occurring in the reporting interval only.

Some embodiments of the method 300 further comprise suspending the event notifications while maintaining the subscription, and resuming the event notifications.

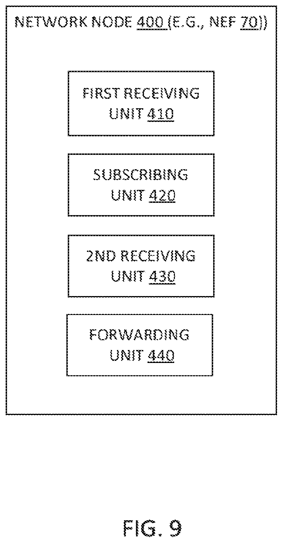

Figure 9 illustrates the main functional components of network node 400 (e.g. NEF 70) configured to provide event notification to an AS 95 outside the wireless communication network 10 for dynamic group events. The network node 400 comprises a first receiving unit 410, a subscribing unit 420, a second receiving 430 and a forwarding unit 440. The various units 410 - 440 can be implemented by hardware and/or by software code that is executed by one or more processors or processing circuits. The first receiving unit 410 is configured to receive a subscription request from the AS 95 requesting event notifications for an event targeting any user in a target area specified by event filter information identified by the subscription request. The subscription unit 420 is configured to subscribe with one or more producer network nodes (e.g., AMFs 40 and/or SMFs 45) providing services to the target area to receive event notifications according to the event filter information in the subscription request. The second receiving unit 430 is configured to receive one or more event notifications from the producer network nodes according to the event filter information. The forwarding unit 440 is configured to forward the received event notification to the AS 95.

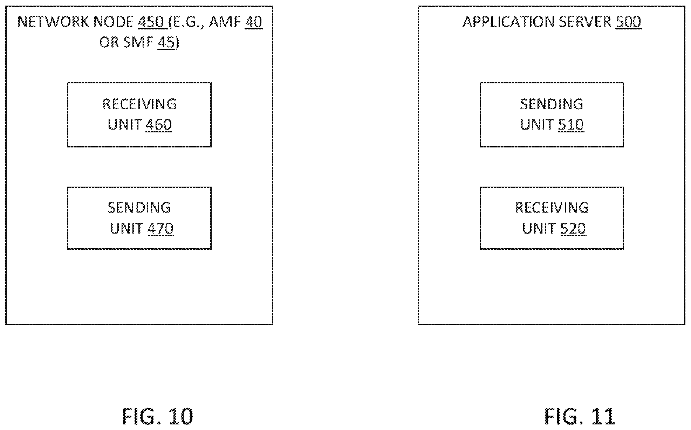

Figure 10 illustrates the main functional components of network node 450 (e.g. AMF 40) configured to provide event notifications to another network node responsive to dynamic group events. The network node 450 comprises a receiving unit 460 and a sending unit 470. The various units 460 - 470 can be implemented by hardware and/or by software code that is executed by one or more processors or processing circuits. The receiving unit 460 is configured to receive a subscription request from a NEF 70 requesting event notifications for an event targeting any user in a target area specified by event filter information identified by the subscription request. The sending unit 470 is configured to send event notifications to the NEF 70 responsive to events according to the event filter information.

Figure 11 illustrates a network node 500 (e.g. AS 95) external to the wireless communication network 10 that is configured to receive event notifications from a second network node in the wireless communication network 10 responsive to dynamic group events. The network node 500 comprises a sending unit 510 and a receiving unit 520. The various units 510 - 520 can be implemented by hardware and/or by software code that is executed by one or more processors or processing circuits. The sending unit 510 is configured to send a subscription request to a NEF 70 in the wireless communication network requesting event notifications for an event targeting any user in a target area specified by event filter information identified by the subscription request. The receiving unit 520 is configured to receive event notifications from the NEF 70 according to the event filter information.

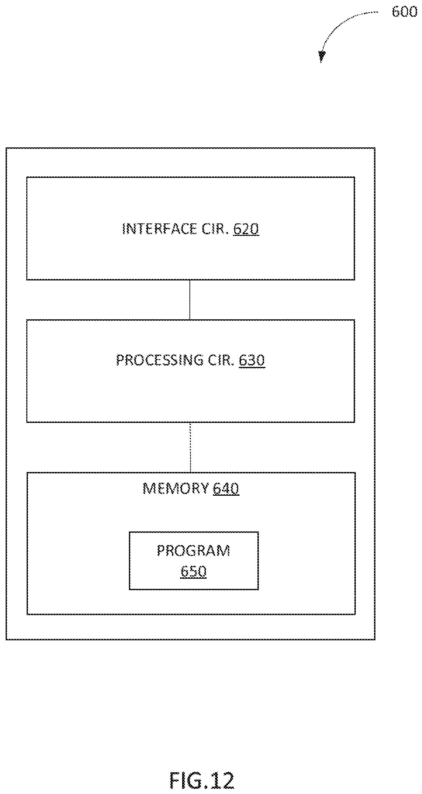

Figure 12 illustrates a network device 600 according to one embodiment that may be configured to function as an AMF 40, SMF 45, NEF 70 or AS 95. The network device 600 comprises an interface circuit 620, processing circuitry 630, and memory 640. The interface circuit 620 couples the network node 600 to a communication network and enables communication with other network nodes in a wireless communication network. The processing circuitry 630 controls the overall operation of the network device 600 and executes computer programs 650 stored in memory 640 to perform one or more of the methods as herein described. The processing circuitry 630 may comprise one or more microprocessors, hardware circuits, firmware, or a combination thereof. Memory 640 comprises both volatile and non-volatile memory for storing computer program code and data needed by the processing circuitry 630 for operation. Memory 640 may comprise any tangible, non-transitory computer-readable storage medium for storing data including electronic, magnetic, optical, electromagnetic, or semiconductor data storage. Memory 640 stores a computer program 650 comprising executable instructions that configure the processing circuitry 630 to implement the method 200 (for a NEF 70) or method 250 (for AMF 40 or SMF 45) or method 300 (for an AS 95) according to Figures 6 - 8 respectively as described herein. A computer program 650 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, the computer program for configuring the processing circuitry 630 as herein described may be stored in a removable memory, such as a portable compact disc, portable digital video disc, or other removable media. The computer program 650 may also be embodied in a carrier such as an electronic signal, optical signal, radio signal, or computer readable storage medium.

Those skilled in the art will also appreciate that embodiments herein further include corresponding computer programs. A computer program comprises instructions that, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method (200) implemented by a network exposure function, NEF (70), in a wireless communication network of providing event notifications for dynamic group events to an application server (95), the method comprising:
receiving (200) a subscription request from the application server (95) requesting event notifications for an event targeting any user in a target area specified by event filter information identified in the subscription request wherein said event filter information includes time information for alternating reporting and non-reporting intervals;
subscribing (210), responsive to the subscription request, with one or more access and mobility management functions, AMFs, providing services to the target area to receive the event notifications according to the event filter information;
receiving (220) one or more event notifications for dynamic group events occurring in the reporting interval only, from the AMFs according to the event filter information; and
forwarding (230) the received event notifications to the application server (95).

2. The method (200) of claim 1 wherein one or more of the event notifications forwarded to the application server (95) includes an IP address of a targeted user when the targeted user has an established PDU session.

3. The method (200) of claim 1 or 2 wherein one or more of the event notifications forwarded to the application server (95) includes a user identity of a targeted user when the targeted user does not have an established PDU session.

4. The method (200) of any one of claims 1 - 3 wherein the subscription request includes a request to receive a supplemental notification when a targeted user in the target area establishes a PDU session after entering the target area.

5. The method (200) of any one of claims 1 - 4 further comprising:
suspending the event notifications while maintaining the subscription to the event notifications; and
resuming the event notifications.

6. A network exposure function, NEF (70) in a wireless communication network, the NEF (70) being configured to:
receive a subscription request from the application server (95) requesting event notifications for a dynamic group event targeting any user in a target area specified by event filter information identified in the subscription request wherein said event filter information includes time information for alternating reporting and non-reporting intervals;
subscribe, responsive to the subscription request, with one or more access and mobility management functions, AMFs, providing services to the target area to receive the event notifications according to the event filter information;
receive one or more event notifications for dynamic group events occurring in the reporting interval only, from the AMFs according to the event filter information; and
forward the received event notifications to the application server (95).

7. The NEF (70) of claim 6 wherein the NEF (70) is further configured to perform the method of any one of claims 2-5.

8. A method (250) implemented by an access and mobility management function (40) of event notifications for dynamic group events from a wireless communication network, the method comprising:
receiving (260) a subscription request from a network exposure function, NEF (70), requesting event notifications for an event targeting any user in a target area specified by event filter information identified in the subscription request wherein said event filter information includes time information for alternating reporting and non-reporting intervals; and
sending (270) event notifications to the NEF (70) responsive to dynamic group events occurring in the reporting interval only, according to the event filter information.

9. The method (250) of claim 8 wherein the subscription request includes a request to receive a supplemental notification when a targeted user in the target area establishes a PDU session after entering the target area.

10. An access and mobility management function, AMF (40), in a wireless communication network, the AMF (40) being configured to:
receive a subscription request from a network exposure function, NEF (70), requesting event notifications for a dynamic group event targeting any user in a target area specified by event filter information identified in the subscription request wherein said event filter information
includes time information for alternating reporting and non-reporting intervals; and
send event notifications to the NEF (70) responsive to dynamic group events occurring in the reporting interval only, according to the event filter information.

11. The AMF (40) of claim 10 wherein the AMF (40) is further configured to perform the method of claim 9.

12. A method (300) implemented by an application server (95, 500, 600) providing content to users in a wireless communication network, the method (300) comprising:
sending (310) a subscription request to a network exposure function, NEF (70), in the wireless communication network requesting event notifications for a dynamic group event targeting any user in a target area specified by event filter information identified in the subscription request wherein said event filter information includes time information for alternating reporting and non-reporting intervals; and
receiving (320) the event notifications for dynamic group events occuring in the reporting interval only, from the NEF (70) according to the event filter information.

13. The method (300) of claim 12 wherein one or more of the event notifications includes an IP address of a targeted user when the targeted user has an established PDU session.

14. An application server (95, 500, 600) configured to:
send a subscription request to a network exposure function, NEF (70), in the wireless communication network requesting event notifications for a dynamic group event targeting any user in a target area specified by event filter information identified in the subscription request wherein said event filter information includes time information for alternating reporting and non-reporting intervals; and
receive the event notifications for dynamic group events occurring in the reporting interval only, from the NEF (70) according to the event filter information.

15. The application server (95, 500, 600) of claim 14 wherein the application server (95, 500, 600) is further configured to perform the method of claim 13.

## Patentansprüche

1. Verfahren (200), das von einer Network-Exposure-Funktion, NEF, (70) in einem Drahtloskommunikationsnetzwerk implementiert wird, zur Bereitstellung von Ereignismeldungen für dynamische Gruppenereignisse an einen Anwendungsserver (95), wobei das Verfahren umfasst:
Empfangen (200) einer Abonnementanforderung vom Anwendungsserver (95), die Ereignismeldungen für ein Ereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen;
Bestellen eines Abonnements (210) in Reaktion auf die Abonnementanforderung bei einer oder mehrerer Zugangs- und Mobilitätsverwaltungsfunktionen, AMF, die Dienste für den Zielbereich bereitstellen, um die Ereignismeldungen gemäß den Ereignisfilterinformationen zu empfangen;
Empfangen (220) einer oder mehrerer Ereignismeldungen nur für dynamische Gruppenereignisse, die im Meldeintervall stattfinden, von den AMFs gemäß den Ereignisfilterinformationen; und
Weitersenden (230) der empfangenen Ereignismeldungen an den Anwendungsserver (95).

2. Verfahren (200) nach Anspruch 1, wobei eine oder mehrere der an den Anwendungsserver (95) weitergesendeten Ereignismeldungen eine IP-Adresse eines Zielbenutzers umfassen, wenn der Zielbenutzer eine aufgebaute PDU-Sitzung aufweist.

3. Verfahren (200) nach Anspruch 1 oder 2, wobei eine oder mehrere der an den Anwendungsserver (95) weitergesendeten Ereignismeldungen eine Benutzeridentität eines Zielbenutzers umfassen, wenn der Zielbenutzer keine aufgebaute PDU-Sitzung aufweist.

4. Verfahren (200) nach einem der Ansprüche 1 bis 3, wobei die Abonnementanforderung eine Anforderung zum Empfangen einer ergänzenden Meldung umfasst, wenn ein Zielbenutzer im Zielbereich nach seinem Eintritt in den Zielbereich eine PDU-Sitzung aufbaut.

5. Verfahren (200) nach einem der Ansprüche 1 bis 4, ferner umfassend:
Unterbrechen der Ereignismeldungen bei Aufrechterhaltung des Abonnements der Ereignismeldungen; und
Wiederaufnehmen der Ereignismeldungen.

6. Network-Exposure-Funktion, NEF, (70) in einem Drahtloskommunikationsnetzwerk, wobei die NEF (70) konfiguriert ist zum:
Empfangen einer Abonnementanforderung vom Anwendungsserver (95), die Ereignismeldungen für ein dynamisches Gruppenereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen;
Bestellen eines Abonnements bei einer oder mehrerer Zugangs- und Mobilitätsverwaltungsfunktionen, AMF, die Dienste für den Zielbereich bereitstellen, um die Ereignismeldungen gemäß den Ereignisfilterinformationen zu empfangen, in Reaktion auf die Abonnementanforderung;
Empfangen einer oder mehrerer Ereignismeldungen nur für dynamische Gruppenereignisse, die im Meldeintervall stattfinden, von den AMFs gemäß den Ereignisfilterinformationen; und
Weitersenden der empfangenen Ereignismeldungen an den Anwendungsserver (95).

7. NEF (70) nach Anspruch 6, wobei die NEF (70) ferner zum Durchführen des Verfahrens nach einem der Ansprüche 2 bis 5 konfiguriert ist.

8. Verfahren (250), das von einer Zugangs- und Mobilitätsfunktion (40) implementiert wird, zur Bereitstellung von Ereignismeldungen für dynamische Gruppenereignisse von einem Drahtloskommunikationsnetzwerk, wobei das Verfahren umfasst:
Empfangen (260) einer Abonnementanforderung einer Network-Exposure-Funktion (70), die Ereignismeldungen für ein Ereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen; und
Senden (270) von Ereignismeldungen an die NEF (70) nur in Reaktion auf dynamische Gruppenereignisse, die im Meldeintervall stattfinden, gemäß den Ereignisfilterinformationen.

9. Verfahren (250) nach Anspruch 8, wobei die Abonnementanforderung eine Anforderung zum Empfangen einer ergänzenden Meldung umfasst, wenn ein Zielbenutzer im Zielbereich nach seinem Eintritt in den Zielbereich eine PDU-Sitzung aufbaut.

10. Zugangs- und Mobilitätsverwaltungsfunktion, AMF, (40) in einem Drahtloskommunikationsnetzwerk, wobei die AMF (40) konfiguriert ist zum:
Empfangen einer Abonnementanforderung einer Network-Exposure-Funktion (70), die Ereignismeldungen für ein dynamisches Gruppenereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen; und
Senden von Ereignismeldungen an die NEF (70) nur in Reaktion auf dynamische Gruppenereignisse, die im Meldeintervall stattfinden, gemäß den Ereignisfilterinformationen.

11. AMF (40) nach Anspruch 10, wobei die AMF (40) ferner zum Durchführen des Verfahrens nach Anspruch 9 konfiguriert ist.

12. Verfahren (300), das von einem Anwendungsserver (95, 500, 600) implementiert wird, zur Bereitstellung von Inhalt für Benutzer in einem Drahtloskommunikationsnetzwerk, wobei das Verfahren (300) umfasst:
Senden (310) einer Abonnementanforderung an eine Network-Exposure-Funktion (70) im Drahtloskommunikationsnetzwerk, die Ereignismeldungen für ein dynamisches Gruppenereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen; und
Empfangen (320) der Ereignismeldungen nur für dynamische Gruppenereignisse, die im Meldeintervall stattfinden, von der NEF (70) gemäß den Ereignisfilterinformationen.

13. Verfahren (300) nach Anspruch 12, wobei eine oder mehrere der Ereignismeldungen eine IP-Adresse eines Zielbenutzers umfassen, wenn der Zielbenutzer eine aufgebaute PDU-Sitzung aufweist.

14. Anwendungsserver (95, 500, 600), der konfiguriert ist zum:
Senden einer Abonnementanforderung an eine Network-Exposure-Funktion (70) im Drahtloskommunikationsnetzwerk, die Ereignismeldungen für ein dynamisches Gruppenereignis anfordert, das für einen beliebigen Benutzer in einem Zielbereich bestimmt ist, der durch Ereignisfilterinformationen spezifiziert wird, die in der Abonnementanforderung identifiziert sind, wobei die Ereignisfilterinformationen Zeitinformationen zum Abwechseln von Melde- und Nichtmeldeintervallen umfassen; und
Empfangen der Ereignismeldungen nur für dynamische Gruppenereignisse, die im Meldeintervall stattfinden, von der NEF (70) gemäß den Ereignisfilterinformationen.

15. Anwendungsserver (95, 500, 600) nach Anspruch 14, wobei der Anwendungsserver (95, 500, 600) ferner zum Durchführen des Verfahrens nach Anspruch 13 konfiguriert ist.

## Revendications

1. Procédé (200) mis en œuvre par une fonction d'exposition de réseau, NEF (70), dans un réseau de communication sans fil pour fournir des notifications d'événement pour des événements de groupes dynamiques à un serveur d'application (95), le procédé comprenant :
la réception (200) d'une demande d'abonnement depuis le serveur d'application (95) demandant des notifications d'événement pour un événement ciblant n'importe quel utilisateur dans une zone cible spécifiée par des informations de filtre d'événement identifiées dans la demande d'abonnement, dans lequel lesdites informations de filtre d'événement incluent des informations de temps pour alterner des intervalles de rapport et de non-rapport ;
l'abonnement (210), en réponse à la demande d'abonnement, à une ou plusieurs fonctions de gestion d'accès et de mobilité, AMF, fournissant des services à la zone cible pour recevoir les notifications d'événement en fonction des informations de filtre d'événement ;
la réception (220) d'une ou plusieurs notifications d'événement pour des événements de groupes dynamiques survenant uniquement dans l'intervalle de rapport, depuis les AMF en fonction des informations de filtre d'événement ; et
le transfert (230) des notifications d'événement reçues au serveur d'application (95).

2. Procédé (200) selon la revendication 1, dans lequel une ou plusieurs des notifications d'événement transférées au serveur d'application (95) incluent une adresse IP d'un utilisateur ciblé lorsque l'utilisateur ciblé a une session de PDU établie.

3. Procédé (200) selon la revendication 1 ou 2, dans lequel une ou plusieurs des notifications d'événement transférées au serveur d'application (95) incluent une identité d'utilisateur d'un utilisateur ciblé lorsque l'utilisateur ciblé n'a pas une session de PDU établie.

4. Procédé (200) selon l'une quelconque des revendications 1 à 3, dans lequel la demande d'abonnement inclut une demande pour recevoir une notification supplémentaire lorsqu'un utilisateur ciblé dans la zone cible établit une session de PDU après son entrée dans la zone cible.

5. Procédé (200) selon l'une quelconque des revendications 1 à 4, comprenant en outre :
la suspension des notifications d'événement tout en maintenant l'abonnement aux notifications d'événement ; et
la reprise des notifications d'événement.

6. Fonction d'exposition de réseau, NEF (70), dans un réseau de communication sans fil, la NEF (70) étant configurée pour :
recevoir une demande d'abonnement depuis le serveur d'application (95) demandant des notifications d'événement pour un événement de groupe dynamique ciblant n'importe quel utilisateur dans une zone cible spécifiée par des informations de filtre d'événement identifiées dans la demande d'abonnement, dans laquelle lesdites informations de filtre d'événement incluent des informations de temps pour alterner des intervalles de rapport et de non-rapport ;
s'abonner, en réponse à la demande d'abonnement, à une ou plusieurs fonctions de gestion d'accès et de mobilité, AMF, fournissant des services à la zone cible pour recevoir les notifications d'événement en fonction des informations de filtre d'événement ;
recevoir une ou plusieurs notifications d'événement pour des événements de groupes dynamiques survenant uniquement dans l'intervalle de rapport, depuis les AMF en fonction des informations de filtre d'événement ; et
transférer les notifications d'événement reçues au serveur d'application (95).

7. NEF (70) selon la revendication 6, dans laquelle la NEF (70) est en outre configurée pour réaliser le procédé selon l'une quelconque des revendications 2 à 5.

8. Procédé (250) mis en œuvre par une fonction de gestion d'accès et de mobilité (40) de notifications d'événement pour des événements de groupes dynamiques depuis un réseau de communication sans fil, le procédé comprenant :
la réception (260) d'une demande d'abonnement depuis une fonction d'exposition de réseau, NEF (70), demandant des notifications d'événement pour un événement ciblant n'importe quel utilisateur dans une zone cible spécifiée par des informations de filtre d'événement identifiées dans la demande d'abonnement, dans lequel lesdites informations de filtre d'événement incluent des informations de temps pour alterner des intervalles de rapport et de non-rapport ; et
l'envoi (270) des notifications d'événement à la NEF (70) en réponse à des événements de groupes dynamiques survenant uniquement dans l'intervalle de rapport, en fonction des informations de filtre d'événement.

9. Procédé (250) selon la revendication 8, dans lequel la demande d'abonnement inclut une demande pour recevoir une notification supplémentaire lorsqu'un utilisateur ciblé dans la zone cible établit une session de PDU après son entrée dans la zone cible.

10. Fonction de gestion d'accès et de mobilité, AMF (40), dans un réseau de communication sans fil, l'AMF (40) étant configurée pour :
recevoir une demande d'abonnement depuis une fonction d'exposition de réseau, NEF (70), demandant des notifications d'événement pour un événement de groupe dynamique ciblant n'importe quel utilisateur dans une zone cible spécifiée par des informations de filtre d'événement identifiées dans la demande d'abonnement, dans laquelle lesdites informations de filtre d'événement incluent des informations de temps pour alterner des intervalles de rapport et de non-rapport ; et
envoyer des notifications d'événement à la NEF (70) en réponse à des événements de groupes dynamiques survenant uniquement dans l'intervalle de rapport, en fonction des informations de filtre d'événement.

11. AMF (40) selon la revendication 10, dans laquelle l'AMF (40) est en outre configurée pour réaliser le procédé selon la revendication 9.

12. Procédé (300) mis en œuvre par un serveur d'application (95, 500, 600) fournissant un contenu à des utilisateurs dans un réseau de communication sans fil, le procédé (300) comprenant :
l'envoi (310) d'une demande d'abonnement à une fonction d'exposition de réseau, NEF (70), dans le réseau de communication sans fil demandant des notifications d'événement pour un événement de groupe dynamique ciblant n'importe quel utilisateur dans une zone cible spécifiée par des informations de filtre d'événement identifiées dans la demande d'abonnement, dans lequel lesdites informations de filtre d'événement incluent des informations de temps pour alterner des intervalles de rapport et de non-rapport ; et
la réception (320) des notifications d'événement pour des événements de groupes dynamiques survenant uniquement dans l'intervalle de rapport, depuis la NEF (70) en fonction des informations de filtre d'événement.

13. Procédé (300) selon la revendication 12, dans lequel une ou plusieurs des notifications d'événement incluent une adresse IP d'un utilisateur ciblé lorsque l'utilisateur ciblé a une session de PDU établie.

14. Serveur d'application (95, 500, 600) configuré pour :
envoyer une demande d'abonnement à une fonction d'exposition de réseau, NEF (70), dans le réseau de communication sans fil demandant des notifications d'événement pour un événement de groupe dynamique ciblant n'importe quel utilisateur dans une zone cible spécifiée par des informations de filtre d'événement identifiées dans la demande d'abonnement, dans lequel lesdites informations de filtre d'événement incluent des informations de temps pour alterner des intervalles de rapport et de non-rapport ; et
recevoir les notifications d'événement pour des événements de groupes dynamiques survenant uniquement dans l'intervalle de rapport, depuis la NEF (70) en fonction des informations de filtre d'événement.

15. Serveur d'application (95, 500, 600) selon la revendication 14, dans lequel le serveur d'application (95, 500, 600) est en outre configuré pour réaliser le procédé selon la revendication 13.
